# EUROPEAN PATENT APPLICATION

(11) **EP 4 310 978 A1**
(43) Date of publication of application: **24.01.2024**
(21) Application number: 21963736.0
(22) Date of filing: 15.11.2021
(51) Int. Cl.: H01M 10/058, H01M 4/13

(54) **ELECTRODE ASSEMBLY AND METHOD FOR MANUFACTURING SAME, AND BATTERY CELL, BATTERY AND ELECTRIC APPARATUS**

(71) Applicant: Contemporary Amperex Technology Co., Limited, Ningde, Fujian 352100 (CN)
(72) Inventor: ZHANG, Nan, Ningde, Fujian 352100 (CN); LU, Li, Ningde, Fujian 352100 (CN)
(74) Representative: Laufhütte, Dieter
(86) International application number: PCT/CN2021/130772
(87) International publication number: WO 2023/082290

(57) **Abstract**

This application provides an electrode assembly and a manufacturing method thereof, a battery cell, a battery, and an electric apparatus. The electrode assembly includes a first electrode plate, where the first electrode plate is coated with both an active substance layer and a viscous substance layer on two sides in a thickness direction of the electrode plate, and the active substance layer and the viscous substance layer on each side are disposed side by side in a height direction of the electrode plate; and separators provided on the two sides of the first electrode plate in the thickness direction of the electrode plate and stacked with the first electrode plate; where in an unfolded state of the electrode assembly, the separator on each side of the first electrode plate is a continuous integral structure, and the separators are connected to the first electrode plate through the viscous substance layers. With the viscous substance layers applied to the first electrode plate, the separators are bonded to the first electrode plate through the viscous substance layers so that the positions of the separators are fixed with respect to the first electrode plate without applying an adhesive layer to the separator, thereby reducing costs and improving the production efficiency.

## Description

### TECHNICAL FIELD

This application relates to the field of energy storage device technologies, and in particular, to an electrode assembly and a manufacturing method thereof, a battery cell, a battery, and an electric apparatus.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development. Therefore, it is important to reduce costs and improve the production efficiency in battery production.

### SUMMARY

To solve the above problems, this application provides an electrode assembly and a manufacturing method thereof, a battery cell, a battery, and an electric apparatus, to reduce costs and improve the production efficiency.

A first aspect of embodiments of this application provides an electrode assembly including a first electrode plate, where the first electrode plate is coated with both an active substance layer and a viscous substance layer on two sides in a thickness direction of the electrode plate, and the active substance layer and the viscous substance layer on each side are disposed side by side in a height direction of the electrode plate; and separators provided on the two sides of the first electrode plate in the thickness direction of the electrode plate and stacked with the first electrode plate; where in an unfolded state of the electrode assembly, the separator on each side of the first electrode plate is a continuous integral structure, and the separators are connected to the first electrode plate through the viscous substance layers.

In the foregoing technical solution, with the viscous substance layers applied to the first electrode plate, the separators are bonded to the first electrode plate through the viscous substance layers so that the positions of the separators are fixed with respect to the first electrode plate without applying an adhesive layer to the separator, thereby reducing costs and improving the production efficiency.

In some embodiments, in the height direction of the electrode plate, the viscous substance layers are applied to two side ends of the first electrode plate, and the active substance layer is applied between the viscous substance layers on two sides.

In the foregoing technical solution, the viscous substance layers are provided at the two side ends of the first electrode plate in the height direction of the electrode plate so that the ends of the first electrode plate are bonded to the separators, thereby reducing the risk of turnover or creasing of the separators and guaranteeing the insulating effects of the separators.

In some embodiments, in the height direction of the electrode plate, one or more viscous substance layers are further disposed spaced apart between the viscous substance layers on two sides, with an active substance layer being provided between two adjacent viscous substance layers.

In the foregoing technical solution, providing one viscous substance layer between the viscous substance layers on two sides can enhance the bonding effect between the separators and the first electrode plate and offer low production costs and high production efficiency. Providing multiple viscous substance layers between the viscous substance layers on two sides can improve flatness of the separators and the first electrode plate while enhancing the bonding effects between the separators and the first electrode plate, reduce the risk of creasing of the separators corresponding to the middle part of the first electrode plate without increasing the overall thickness of the electrode assembly after stacking, and improve the quality of the electrode assembly.

In some embodiments, the viscous substance layer has a width of 2-20 mm in the height direction of the electrode plate. This can improve the bonding strength between the separators and the first electrode plate in the height direction of the electrode plate.

In some embodiments, thickness of the viscous substance layer in the thickness direction of the electrode plate is larger than or equal to thickness of the active substance layer. This can ensure that when the separator is attached to the first electrode plate, the separator comes into contact with the viscous substance layer so that the viscous substance layer can bond the separator.

In some embodiments, the viscous substance layer has a thickness of 25-120 µm in the thickness direction of the electrode plate.

In the foregoing technical solution, controlling the thickness of the viscous substance layer can not only guarantee the bonding of the separators and the viscous substance layers but also guarantee the overall thickness of the first electrode plate, thereby effectively controlling the thickness of the electrode assembly.

In some embodiments, the viscous substance layer is a hot-melt adhesive layer, and the hot-melt adhesive layer connects the separator and the first electrode plate through thermal lamination.

In the foregoing technical solution, after the viscous substance layers go through thermal lamination, the hot melt adhesive acts to produce adhesion so that the separator is bonded to the viscous substance layer, thereby achieving the effect of bonding the separator to the first electrode plate.

In some embodiments, a material of the viscous substance layer is polypropylene. Polypropylene is resistant to electrolyte and bonds the separator to the first electrode plate under the action of thermal lamination at a temperature of 70-90°C.

In some embodiments, the first electrode plate includes multiple bending segments and multiple stacked first stacking segments, each bending segment connecting two adjacent first stacking segments; and in the thickness direction of the electrode plate, the bending segment includes a thinned portion or a cutoff portion to facilitate bending of the first electrode plate.

In the foregoing technical embodiment, when used in electrode assembly manufacturing, thinned portions and cutoff portions guide the first electrode plate to bend at the regions of the thinned portions so as to facilitate the stacking operation, thereby helping to improve the controllability and accuracy of bending positions.

In some embodiments, the first electrode plate is an anode plate. Having the anode plate bonded to the separators as the first electrode plate can reduce the risk of corrosion to a housing caused by powder falling of an anode active substance material.

In some embodiments, the electrode assembly further includes a second electrode plate opposite to the first electrode plate in polarity, where the second electrode plate includes multiple second stacking segments, and in a stacked state of the electrode assembly, each second stacking segment is provided between two adjacent first stacking segments.

The foregoing technical solution enables the electrode assembly formed to better meet use requirements and optimizes the electrical performance of the electrode assembly.

A second aspect of the embodiments of this application provides a manufacturing method of electrode assembly including the following steps: providing a first electrode plate, and applying both an active substance layer and a viscous substance layer to two sides of the first electrode plate in a thickness direction so that the active substance layer and the viscous substance layer are disposed adjacent to each other; providing separators, and disposing the separators on the two sides of the first electrode plate in the thickness direction of the electrode plate and stacking the separators and the first electrode plate; and connecting the separators to the first electrode plate through the viscous substance layers.

In some embodiments, the viscous substance layer connects the separator and the first electrode plate through thermal lamination.

In some embodiments, the step of providing a first electrode plate includes: forming multiple thinned portions on the first electrode plate through indenting or laser cleaning.

In some embodiments, the manufacturing method of electrode assembly further includes the following steps: stacking the separators and the first electrode plate together and bending at the multiple thinned portions so that the first electrode plate has multiple bending segments and multiple stacked first stacking segments, each bending segment connecting two adjacent first stacking segments.

In some embodiments, the manufacturing method of electrode assembly further includes: providing a second electrode plate and providing the second electrode plate between stacked adjacent first stacking segments.

A third aspect of the embodiments of this application provides a battery cell including the electrode assembly according to the first aspect or including an electrode assembly manufactured by using the manufacturing method of electrode assembly according to the second aspect.

A fourth aspect of the embodiments of this application provides a battery including multiple battery cells according to the third aspect.

A fifth aspect of the embodiments of this application provides an electric apparatus including the battery according to the fourth aspect, where the battery is configured to supply electrical energy.

It should be understood that the foregoing general description and the following detailed description are only exemplary and are not intended to limit this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely specific embodiments of this application, and persons of ordinary skill in the art may derive other embodiments from the following accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery module according to an embodiment of this application;
FIG. 4 is a schematic exploded view of a battery cell according to some embodiments of this application;
FIG. 5 is a cross-sectional view of an electrode assembly according to some embodiments of this application;
FIG. 6 is a schematic diagram of a first electrode plate and separator unfolded according to some embodiments of this application;
FIG. 7 is a cross-sectional view along A-A of FIG. 6;
FIG. 8 is a schematic diagram of the first electrode plate in FIG. 6;
FIG. 9 is a cross-sectional view along A-A of FIG. 6 according to some other embodiments;
FIG. 10 is a schematic diagram of the first electrode plate in FIG. 9;
FIG. 11 is an enlarged view of part II in FIG. 9;
FIG. 12 is a schematic diagram of a first electrode plate stacked according to some embodiments of this application;
FIG. 13 is an enlarged view of part I in FIG. 5;
FIG. 14 is a cross-sectional view of an electrode assembly according to some other embodiments of this application;
FIG. 15 is a schematic diagram of a first electrode plate according to some other embodiments of this application;
FIG. 16 is a schematic structural diagram of connection a first electrode plate, a second electrode plate, and separators in the embodiment shown in FIG. 5; and
FIG. 17 is a flowchart of a manufacturing method of electrode assembly according to an embodiment of this application.

### Reference signs:

1. vehicle; 2. battery; 3. controller; 4. motor; 5. box; 51. first box portion; 52. second box portion; 53. accommodating space; 20. battery cell; 200. battery module; 21. end cover assembly, 211. electrode terminal, 212. end cover; 22. electrode assembly; 221. tab, 222. first electrode plate, 2221. active substance layer, 2222. viscous substance layer, 2223. first tab, 2224. current collector, 2225. bending portion, 22251. thinned portion, 22252. cutoff portion, 2226. first stacking segment, 223. separator, 224. second electrode plate, 2241. second stacking segment; 23. housing, and 231. opening.

The accompanying drawings herein are incorporated into this specification and form a part of this specification. They illustrate embodiments conforming to this application and are intended to explain the principles of this application together with this specification.

### DESCRIPTION OF EMBODIMENTS

To help better understand the technical solutions of this application, the following describes the embodiments of this application in detail with reference to the accompanying drawings.

Apparently, the described embodiments are merely some but not all of the embodiments of this application. All other embodiments obtained by persons of ordinary skill in the art based on the embodiments of this application without creative efforts shall fall within the protection scope of this application.

The terms used in the embodiments of this application are merely intended to describe specific embodiments, but not intended to limit this application. The terms "a/an", "the", and "this" of singular forms used in the embodiments and the appended claims of this application are also intended to include plural forms, unless otherwise specified in the context clearly.

It should be understood that the term "and/or" used in this specification is only an associative relationship for describing associated objects, indicating presence of three possible relationships. For example, A and/or B may indicate three cases: presence of only A; presence of both A and B; and presence of only B. In addition, the character "/" in this specification generally indicates an "or" relationship between contextually associated objects.

It should be noted that the orientation terms such as "above", "under", "left", and "right" described in the embodiments of this application refer to orientations as seen from the angles shown in the accompanying drawings, and should not be understood as limitations on the embodiments of this application. In addition, in the context, it should be further understood that when an element is described as being "above" or "under" another element, that element may not only be directly connected "above" or "under" the another element, but also be indirectly connected "above" or "under" the another element through an intermediate element.

In this application, "multiple" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a cathode plate, an anode plate, and separators. The battery cell mainly relies on migration of metal ions between the cathode plate and the anode plate to work. The cathode plate includes a cathode current collector and a cathode active substance layer. A surface of the cathode current collector is coated with the cathode active substance layer. A cathode current collector not coated with the cathode active substance layer protrudes from a cathode current collector already coated with the cathode active substance layer, and the cathode current collector not coated with the cathode active substance layer serves as a cathode tab. A surface of the anode current collector is coated with the anode active substance layer. An anode current collector not coated with the anode active substance layer protrudes from an anode current collector already coated with the anode active substance layer, and the anode current collector not coated with the anode active substance layer serves as an anode tab. To allow a high current to pass through without any fusing, multiple cathode tabs are provided and stacked together, and multiple anode tabs are provided and stacked together.

The electrode assembly may be a wound structure or a stacked structure. A wound electrode assembly is formed by winding a cathode plate, an anode plate, and a separator between the cathode plate and the anode plate together. A stacked electrode assembly includes a structure formed by alternately stacking multiple cathode plates, multiple anode plates, and separators, or may be an electrode assembly formed by attaching separators to two sides of one continuous integral electrode plate (anode plate or cathode plate) in a thickness direction of the electrode plate and zigzag stacking the electrode plate and a cathode plate. In such structure having the separators completely wrapping the anode plate, the separators on the two sides in the thickness direction of the electrode plate are completely attached to the electrode plate so that neither the electrode will be displaced nor the electrode will come into contact with another electrode, thereby effectively preventing short circuits, guaranteeing the safety of batteries, and guaranteeing full extraction of battery capacity.

The inventors have found that for the stacked electrode assembly, when the separators are to be attached to two sides of the electrode plate in the thickness direction of the electrode plate, to attach the separators to the two sides of the electrode plate in the thickness direction of the electrode plate, the entire separator is generally coated with glue so that the separator is attached to the electrode plate through viscosity of an adhesive layer on the separator. However, it costs highly to coat the entire separator with adhesive, resulting in the overall high costs of making the electrode assembly, and coating the entire separator with adhesive leads to low production efficiency.

In view of this, the embodiments of this application provide a technical solution in which no adhesive needs to be applied on separators, an adhesive layer is applied on a current collector on two sides of an active substance layer of an electrode plate in a height direction of the electrode plate to bond the separator to the adhesive layer on the current collector, thereby attaching the separator to the electrode plate, reducing costs, and improving production efficiency. The following is a detailed description of the embodiments of this application.

The technical solution described in the embodiments of this application is applicable to batteries and electric apparatuses.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the apparatus using a battery being a vehicle is used as an example for description of the following embodiments.

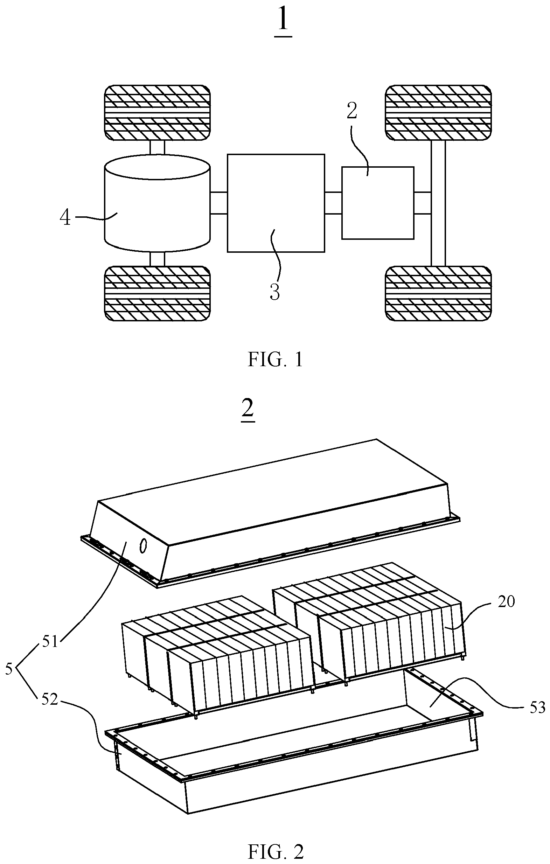

FIG. 1 is a schematic structural diagram of a vehicle 1 according to some embodiments of this application.

As shown in FIG. 1, a battery 2 is provided inside the vehicle 1, the battery 2 refers to a single physical module that includes one or more battery cells to provide higher voltage and capacity. For example, the battery 2 mentioned in this application may include a battery module or a battery pack. The battery 2 may be provided at the bottom, head, or tail of the vehicle 1. The battery 2 may be configured to supply power to the vehicle 1. For example, the battery 2 may be used as an operational power source for the vehicle 1. The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 may be used as not only the operational power source for the vehicle 1 but also a driving power source for the vehicle 1, replacing or partially replacing fossil fuel or natural gas to provide driving traction for the vehicle 1.

FIG. 2 is a schematic exploded view of a battery 2 according to some embodiments of this application.

As shown in FIG. 2, the battery 2 includes a box 5 and battery cells 20, and the battery cells 20 are accommodated in the box 5.

The box 5 is configured to accommodate the battery cells 20, and the box 5 may have various structures. In some embodiments, the box 5 may include a first box portion 51 and a second box portion 52. The first box portion 51 and the second box portion 52 fit together and jointly define an accommodating space 53 for accommodating the battery cells 21. The second box portion 52 may be a hollow structure with one end open, the first box portion 51 may be a plate-shaped structure, and the first box portion 51 covers the opening side of the second box portion 52 so as to form the box 5 having the accommodating space 53. Alternatively, the first box body portion 51 and the second box portion 52 may both be a hollow structure with one side open, and the opening side of the first box portion 51 is engaged with the opening side of the second box portion 52 so as to form the box 5 having the accommodating space 53. Certainly, the first box portion 51 and the second box portion 52 may be in various shapes, such as cylinder and cuboid.

In order to improve the airtightness after the connection of the first box portion 51 and the second box portion 52, a sealing element such as sealing gum or sealing ring may also be disposed between the first box portion 51 and the second box portion 52.

When the first box portion 51 fits on a top of the second box portion 52, the first box portion 51 may also be referred to as an upper cover, and the second box portion 52 may also be referred to as a lower box.

The battery 2 may include multiple battery cells 20. The multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and a whole constituted by the multiple battery cells 20 is accommodated in the box 5. Certainly, multiple battery cells 20 may first be connected in series, parallel, or series-parallel to constitute a battery pack, and then multiple battery packs are connected in series, parallel, or series-parallel to constitute a whole which is accommodated in the box 5.

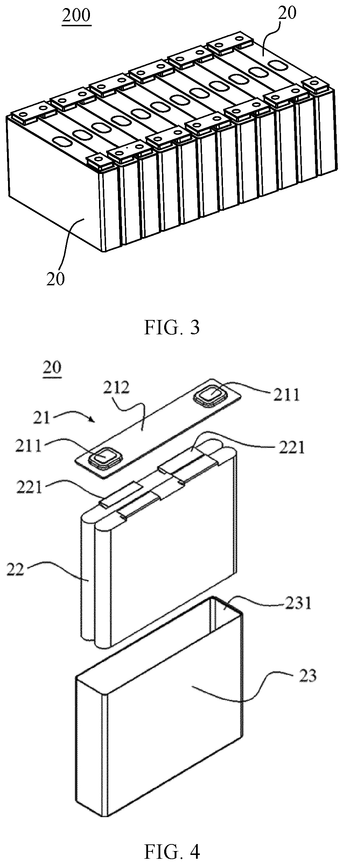

FIG. 3 is a schematic structural diagram of a battery module 200 according to an embodiment of this application.

As shown in FIG. 3, because each battery 2 may include a large number of battery cells 20, for ease of installation, the battery cells 20 may be arranged by group, and each group of battery cells 20 form a battery module 200. The battery 2 may include multiple battery modules 200. These battery modules 200 may be connected in series, parallel, or series-parallel.

FIG. 4 is a schematic exploded view of a battery cell 20 according to some embodiments of this application.

Refer to FIG. 4. The battery cell 20 is a smallest unit for forming the battery 2. In some embodiments of this application, the battery cell 20 may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell 20 may be flat, rectangular, or of other shapes, and this is not limited in the embodiments of this application either. For ease of illustration, a rectangular battery cell 20 is used as an example in all the following embodiments.

Still refer to FIG. 4. The battery cell 20 includes an end cover assembly 21, an electrode assembly 22, and a housing 23. The housing 23 is configured to accommodate the electrode assembly 22. The housing 23 may have various shapes and sizes. Specifically, the shape of the housing 23 may be determined according to the specific shape and size of one or more electrode assemblies 22. In some embodiments, the housing 23 is a hollow cuboid. In some other embodiments, the housing 23 may be cylindrical or in other shapes. One end of the housing 23 is an opening 231. The end cover assembly 21 covers the opening 231 and is joined with the housing 23 to form an enclosed chamber for accommodating the electrode assembly 22. The chamber may be filled with electrolyte. In some embodiments, the end cover assembly 21 includes an end cover 212. The end cover 212 is provided with an electrode terminal 211, and the electrode assembly 22 is provided with a tab 221. The electrode terminal 211 may be configured to be electrically connected with the tab 221 to output electric energy of the battery cell 20. For each electrode terminal 211, a corresponding current collecting component may be provided. The current collecting component may be disposed between the end cover 212 and the tab 221 to electrically connect the electrode terminal 211 and the tab 221. The end cover assembly 21 may be further provided with other functional components, for example, a pressure relief mechanism for relieving internal pressure when pressure or temperature inside the battery cell 20 reaches a threshold. The housing 23 and the end cover 212 may be made of various materials, for example, copper, iron, aluminum, stainless steel, or aluminum alloy.

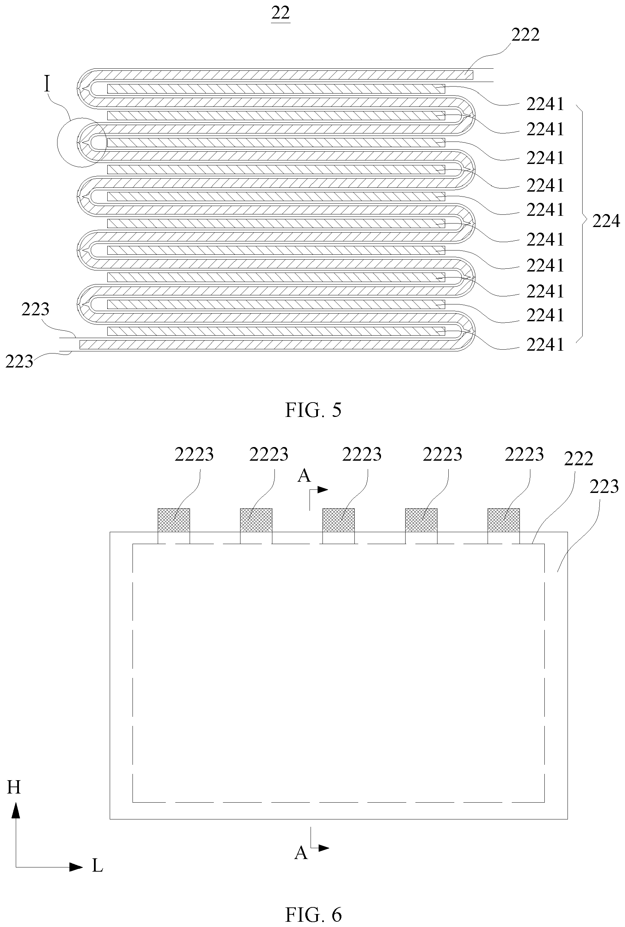

FIG. 5 is a cross-sectional view of an electrode assembly 22 according to some embodiments of this application.

As shown in FIG. 5, the electrode assembly 22 in some embodiments of this application includes a first electrode plate 222, separators 223, and a second electrode plate 224. The first electrode plate 222 and the separator 223 each are a continuous integral structure. In some other embodiments, the first electrode plate 222 may also be multiple split electrode plates, and the continuous separators 223 are provided on two sides of the multiple electrode plates in a thickness direction of the electrode plates.

The separators 223 on two sides are provided on the two sides of the first electrode plate 222 in the thickness direction of the electrode plate. The first electrode plate 222 and the separators 223 on two sides are folded over and over again so that the first electrode plate 222 and the separators 223 on two sides are bent over and over again roughly in a zigzag pattern. The second electrode plate 224 is provided between adjacent two sides of the first electrode plate 222 of the stacked structure. The first electrode plate 222 is separated from the second electrode plate 224 by the separators 223 so as to form the electrode assembly 22 of the stacked structure. The first electrode plate 222 and the second electrode plate 224 have opposite polarities, and when one of them is a cathode plate, the other is an anode plate. The separator 223 is a microporous film for separating the first electrode plate 222 and the second electrode plate 224 and is a polymeric functional material with nanoscale micropores. The separator 223 is configured to prevent a short circuit caused by the two electrode plates coming into contact with each other and allow electrolyte ions to pass through. The separator 223 may be a polyolefin microporous film made of polyolefin material that includes polyethylene (PE) monofilm, polypropylene (PP) monofilm, and microporous multifilm made of polyethylene and polypropylene.

To attach the separator 223 on two sides of the first electrode plate 222 in the thickness direction of the electrode plate, an adhesive is generally applied to the entire separator 223 to bond the separator 223 to the first electrode plate 222 through viscosity of the adhesive. However, it costs highly to coat the entire separator with adhesive, resulting in the overall high costs of making the electrode assembly 22, and coating the entire separator 223 with adhesive leads to low production efficiency.

In some technologies, to reduce costs, separators 223 are not coated with an adhesive. Instead, adhesive layers are applied to multiple positions of the active substance layer of the first electrode plate 222, and then the separator 223 is bonded to these adhesive layers to attach the separator 223 to the first electrode plate 222. However, in such attachment, the adhesive layers are directly applied to the active substance layer, and consequently, the capacity of this part of the active substance cannot be extracted. In addition, it is not easy to control the thickness of the adhesive layer on the active substance, affecting the thickness of the entire electrode assembly 22. Moreover, applying adhesive layers at multiple positions of the active substance layer leads to low production efficiency.

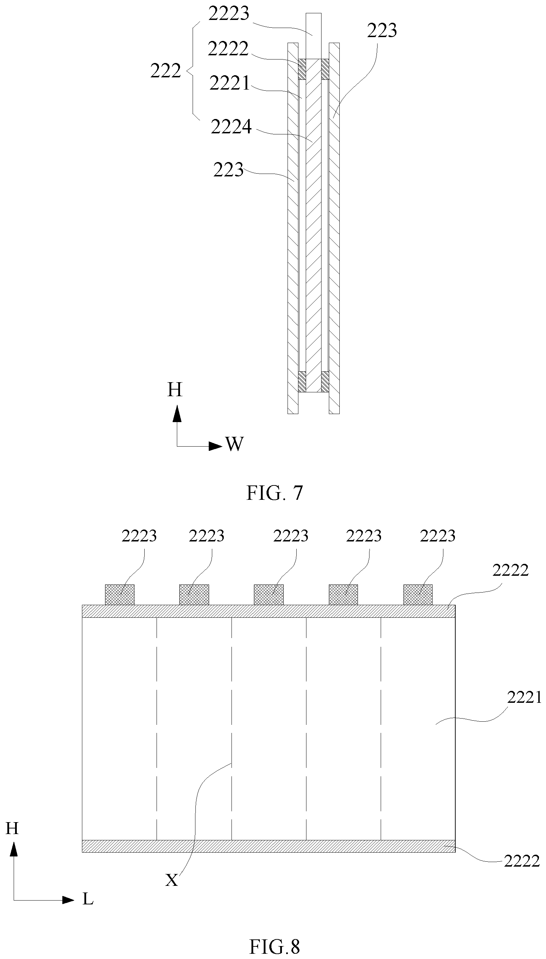

FIG. 6 is a schematic diagram of the first electrode plate 222 and separator 223 unfolded according to some embodiments of this application. FIG. 7 is a cross-sectional view along A-A of FIG. 6. FIG. 8 is a schematic diagram of the first electrode plate 222 in FIG. 6.

As shown in FIGs. 6 to 8, the electrode assembly 22 in the embodiments of this application includes the first electrode plate 222 and the separators 223. The first electrode plate 222 is coated with both an active substance layer 2221 and a viscous substance layer 2222 on two sides in a thickness direction W of the electrode plate. The active substance layer 2221 and the viscous substance layer 2222 on each side are disposed side by side in a height direction H of the electrode plate. The separators 223 are provided on the two sides of the first electrode plate 222 in the thickness direction W of the electrode plate and stacked with the first electrode plate 222. Dashed box in FIG. 6 indicates the outline of the first electrode plate 222. In an unfolded state of the electrode assembly 22, the separator 223 on each side of the first electrode plate 222 is a continuous integral structure, and the separators 223 are connected to the first electrode plate 222 through the viscous substance layers 2222.

Still refer to FIGs. 7 and 8. In some embodiments, the first electrode plate 222 includes a current collector 2224, first tabs 2223 extending from one side end of the current collector 2224 in the height direction H of the electrode plate, and the active substance layer 2221 and viscous substance layers 2222 applied on the current collector 2224. The current collector 2224 is coated with both the active substance layer 2221 and the viscous substance layer 2222 on two sides in the thickness direction W of the electrode plate. In the height direction H of the electrode plate, the viscous substance layer 2222 and the active substance layer 2221 are disposed adjacent and side by side. The viscous substance layer 2222 may extend along a length direction L of the electrode plate and run through the entire first electrode plate 222. The viscous substance layer 2222 and the active substance layer 2221 are provided parallel to each other in the length direction L of the electrode plate. There may be at least one viscous substance layer 2222, and when there are multiple viscous substance layers 2222, the viscous substance layers 2222 may be alternately provided with the active substance layer 2221.

The current collector 2224 has two opposite surfaces in the thickness direction W of the electrode plate, and the two surfaces may be coated with both the active substance layer 2221 and the viscous substance layer 2222. In a specific example, when the first electrode plate 222 is an anode plate, the current collector 2224 is made of a metallic material such as copper or copper alloy. When the first electrode plate 222 is a cathode plate, the current collector 2224 is made of a metallic material such as aluminum or aluminum alloy.

The active substance layer 2221 is applied on two opposite surfaces of the first electrode plate 222 in the thickness direction W of the electrode plate so that the active substance layer 2221 can generate electrical energy through electrochemical reaction during charge and discharge of the battery 2. When the first electrode plate 222 is an anode plate, a material of the active substance layer 2221 may include but is not limited to carbon or silicon. When the first electrode plate 222 is a cathode plate, a material of the active substance layer 2221 may include but is not limited to lithium cobaltate, lithium iron phosphate, lithium ternary, or lithium manganate.

With the viscous substance layer 2222 applied on two opposite surfaces of the first electrode plate 222 in the thickness direction W of the electrode plate, the viscous substance layer 2222 can bond the separator 223 to the first electrode plate 222 under specific conditions because it is composed of a material with some adherence. In some embodiments, the viscous substance layer 2222 is a hot-melt adhesive layer that bonds the separator 223 to the first electrode plate 222 through thermal lamination.

In some embodiments, the continuous integral separators 223 are provided on the two sides of the first electrode plate 222 in the thickness direction W of the electrode plate. The separators 223 are provided in pairs, and the first electrode plate 222 is provided between the two separators 223. The overall size of the separator 223 being larger than the overall size of the first electrode plate 222 enables the first electrode plate 222 to be entirely enclosed by the separators 223 on two sides, thereby fully separating the first electrode plate 222 from the second electrode plate 224 after the electrode assembly 22 is formed, so as to implement insulation between the two plates.

During manufacturing of the battery assembly 22, two integral separators 223 are provided on two sides of the first electrode plate 222 in the thickness direction W of the electrode plate so that the first electrode plate 222 is provided between the two separators 223. Then, the two separators 223 are bonded to the corresponding viscous substance layers 2222 on two sides of the first electrode plate 222 to attach the separators 223 to the first electrode plate 222 and to fix the positions of the separators 223 with respect to the first electrode plate 222.

After the separators 223 are provided on the two sides of the first electrode plate 222 in the thickness direction W of the electrode plate, the separators 223 and the first electrode plate 222 may be folded over and over again in a way that the first electrode plate 222 and the separators 223 on two sides are bent roughly in a zigzag pattern to form the electrode assembly 22. The multiple first tabs 2223 spaced apart are provided at one side end of the current collector 2224 in the height direction H of the electrode plate. The first tabs 2223 extend outwardly from the current collector 2224 and run through the viscous substance layer 2222 on this side. After the first electrode plate 222 is zigzag stacked, the multiple first tabs 2223 overlap to form a tab 221 of a multi-tab structure for electrical connection with an electrode terminal 211.

Multiple dashed lines X in FIG. 8 do not indicate entities but only illustratively mark bending positions at which the first electrode plate 222 and the separators 223 are zigzag stacked, and these bending positions are bending regions having a specific width.

In the foregoing embodiments, with the viscous substance layers 2222 applied to two side ends of the current collector 2224 in the height direction W of the electrode plate, the separators 223 are bonded to the first electrode plate 222 through the viscous substance layers 2222 so that the positions of the separators 223 are fixed with respect to the first electrode plate 222 without applying an adhesive layer to the separator 223, thereby reducing costs and improving the production efficiency.

In some technologies, adhesive layers are applied to multiple positions of the active substance layer 2221 of the first electrode plate 222, and then the separator 223 is bonded to these adhesive layers to attach the separator 223 to the first electrode plate 222. However, in such attachment, the adhesive layers are directly applied to the active substance layer 2221, and consequently, the capacity of this part of the active substance cannot be extracted.

Still refer to FIGs. 7 and 8. In some embodiments, to avoid applying the viscous substance layer 2222 to the active substance layer 2221, in the height direction H of the electrode plate, the viscous substance layers 2222 are applied to two side ends of the first electrode plate 222, and the active substance layer 2221 is applied between the viscous substance layers 2222 on two sides.

The viscous substance layer 2222 is applied to two side ends of the current collector 2224, but projections of the viscous substance layer 2222 and the active substance layer 2221 in the thickness direction W of the electrode plate do not overlap, in other words, both the viscous substance layer 2222 and the active substance layer 2221 are directly applied to the current collector 2224.

Both the viscous substance layer 2222 and the active substance layer 2221 are directly applied to the current collector 2224 and disposed side by side so that the viscous substance layer 2222 does not cover the active substance layer 2221. Therefore, neither capacity extraction of the active substance layer 2221 is affected nor the overall thickness of the first electrode plate 222 is increased. Moreover, the viscous substance layers 2222 are provided at the two side ends of the first electrode plate 222 in the height direction H of the electrode plate so that the ends of the first electrode plate 222 are bonded to the separators 223, thereby reducing the risk of turnover or creasing of the separators 223 and guaranteeing the insulating effects of the separators 223.

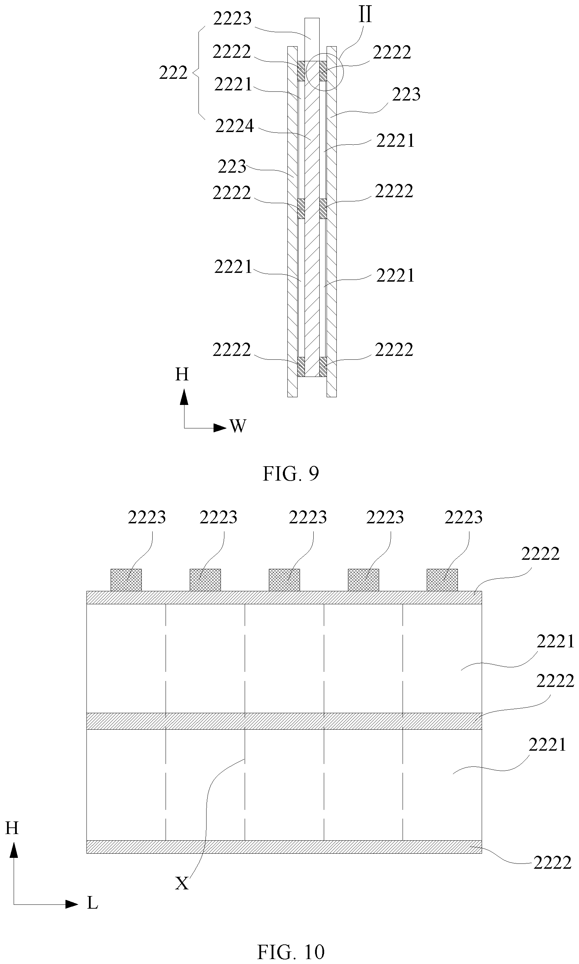

FIG. 9 is a cross-sectional view along A-A of FIG. 6 according to some other embodiments. FIG. 10 is a schematic diagram of the first electrode plate 222 in FIG. 9.

As shown in FIGs. 9 and 10, in some embodiments, in the height direction H of the electrode plate, one or more viscous substance layers 2222 are further disposed spaced apart between the viscous substance layers 2222 at two side ends, with an active substance layer 2221 being provided between two adjacent viscous substance layers 2222.

In the height direction H of the electrode plate, the viscous substance layer 2222 is applied to the two side ends of the first electrode plate 222. For the first electrode plate 222 with a larger height, at least one viscous substance layer 2222 may be provided between the viscous substance layers 2222 at the two side ends in order to enhance the bonding effects between the separator 223 and the first electrode plate 222. It can be understood that at least one viscous substance layer 2222 is evenly distributed between the viscous substance layers 2222 at the two side ends (that is, the middle part of the first electrode plate 222), and each viscous substance layer 2222 is disposed adjacent to and side by side with the active substance layer 2221, and does not overlap the active substance layer 2221 in terms of projection in the thickness direction W of the electrode plate, in other words, the viscous substance layer 2222 and the active substance layer 2221 do not cover each other. Each viscous substance layer 2222 and each active substance layer 2221 are provided parallel to each other in the length direction L of the electrode plate. There may be at least one viscous substance layer 2222, and when there are multiple viscous substance layers 2222, the viscous substance layers 2222 may be alternately provided with the active substance layer 2221.

Providing one viscous substance layer 2222 at the middle part can enhance the bonding effects between the separators 223 and the first electrode plate 222 and offer low production costs and high production efficiency. Providing multiple viscous substance layers 2222 at the middle part can improve flatness of the separators 223 and the first electrode plate 222 while enhancing the bonding effects between the separators 223 and the first electrode plate 222, reduce the risk of creasing of the separators 223 corresponding to the middle part of the first electrode plate 222 without increasing the overall thickness of the electrode assembly 22 after stacking, and improve the quality of the electrode assembly 22.

In some embodiments, the viscous substance layer 2222 has a height of 2-20 µm in the height direction H of the electrode plate. Since the viscous substance layer 2222 can extend in the length direction L of the electrode plate and run through the entire length of the first electrode plate 222, the bond strength of the separator 223 to the first electrode plate 222 in the length direction L of the electrode plate can be guaranteed. However, the viscous substance layers 2222 are spaced apart in the height direction H of the electrode plate, and an active substance layer 2221 is provided between two adjacent viscous substance layers 2222. Because the separator 223 is not viscous, the active substance layer 2221 of the first electrode plate 222 is not bonded and fixed to a corresponding separator 223, setting the width of the viscous substance layer 2222 in the height direction H of the electrode plate to 2-20 mm can improve the bond strength between the separator 223 and the first electrode plate 222 in the height direction H of the electrode plate.

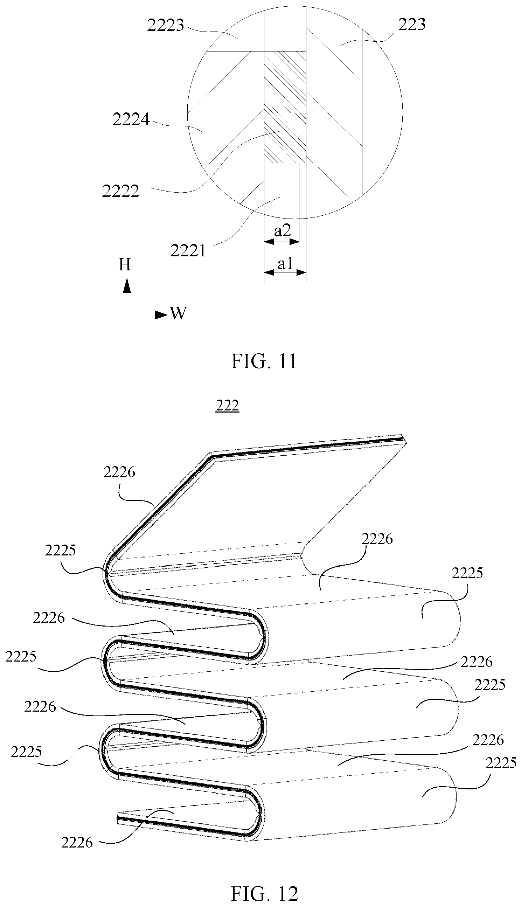

FIG. 11 is an enlarged view of part II in FIG. 9.

As shown in FIG. 11, in some embodiments, thickness a1 of the viscous substance layer 2222 in the thickness direction W of the electrode plate is larger than or equal to thickness a2 of the active substance layer 2221. This can ensure that when the separator 223 is attached to the first electrode plate 222, the separator 223 comes into contact with the viscous substance layer 2222 so that the viscous substance layer 2222 can bond the separator 223.

In some embodiments, the thickness a1 of the viscous substance layer 2222 in the thickness direction W of the electrode plate is 25-120 µm. Controlling the thickness of the viscous substance layer 2222 can not only guarantee the bonding of the separators 223 and the viscous substance layers 2222 but also guarantee the overall thickness of the first electrode plate 222, thereby effectively controlling the thickness of the electrode assembly 22.

In some embodiments, the viscous substance layer 2222 is a hot-melt adhesive layer, and the hot-melt adhesive layer connects the separator 223 and the first electrode plate 222 through thermal lamination. After the viscous substance layers 2222 go through thermal lamination, the hot melt adhesive acts to produce adhesion so that the separator 223 is bonded to the viscous substance layer 2222, thereby achieving the effect of bonding the separator 223 to the first electrode plate 222.

In some embodiments, a material of the viscous substance layer 2222 is polypropylene. Polypropylene is resistant to electrolyte and bonds the separator 223 to the first electrode plate 222 under the action of thermal lamination at a temperature of 70-90°C.

The viscous substance layer 2222 is applied at two side ends and the middle part of the current collector 2224 of the first electrode plate 222 in the height direction H of the electrode plate so that the separator 223 is bonded to the first electrode plate 222 without applying an adhesive layer to the entire separator 223, thereby reducing the production costs and improving the production efficiency. The two side ends of the first electrode plate 222 in the height direction H of the electrode plate are bonded to the separator 223, and the first electrode plate 222 and the separators 223 are zigzag stacked, thereby preventing the separator 223 from turning over while such turnover makes the first electrode plate 222 and the second electrode plate 224 come into contact, and reducing the risk of short circuits of the electrode assembly 22.

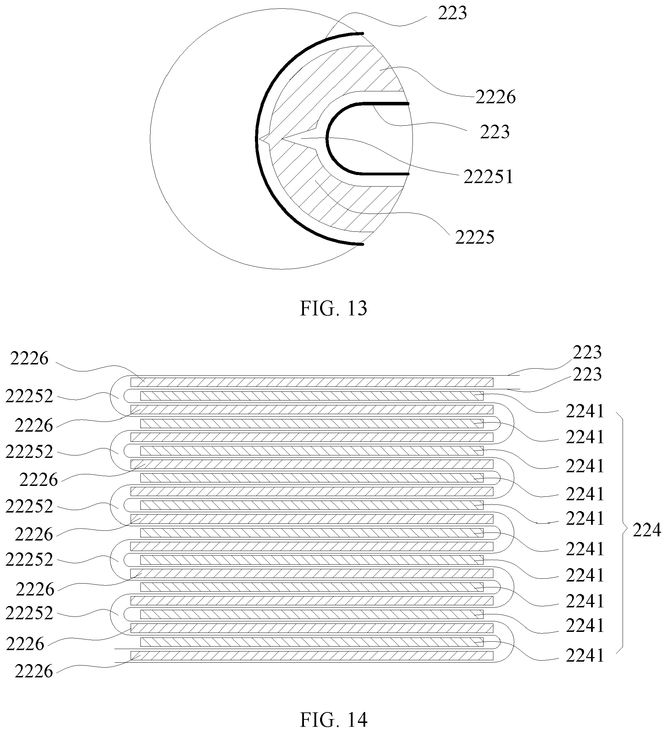

FIG. 12 is a schematic diagram of a first electrode plate 222 stacked according to some embodiments of this application. FIG. 13 is an enlarged view of part I in FIG. 5.

As shown in FIG. 5, FIG. 12, and FIG. 13, in some embodiments, the first electrode plate 222 includes multiple bending segments 2225 and multiple stacked first stacking segments 2226, each bending segment 2225 connecting two adjacent first stacking segments 2226. In the thickness direction W of the electrode plate, the bending segment 2225 includes a thinned portion 22251 or a cutoff portion 22252 (see FIG. 14) to facilitate bending of the first electrode plate 222.

After unfolded, the multiple bending segments 2225 in FIG. 12 correspond to regions at positions indicated by multiple dashed lines X in FIGs. 8 and 10. FIG. 8, FIG. 10, and FIG. 12 only exemplarily illustrate a structure of the first electrode plate 222. The specific number of the bending segments 2225 and first stacking segments 2226 may be set depending on dimensions of the electrode assembly 22, and this application does not make any specific limitation in this regard.

The first electrode plate 222 in FIGs. 5 and 12 is a continuous integral structure. During manufacturing of the electrode assembly, one continuous integral separator 223 is first attached to both sides of the first electrode plate 222 in the thickness direction W of the electrode plate. Then thermal lamination is performed on the separator 223 and the viscous substance layer 2222 to bond the separator 223 to the first electrode plate 222. When zigzag stacking is to be performed on the first electrode plate 222, the first electrode plate 222 and the separators 223 on two sides are bent at the regions at positions indicated by the dashed lines X so that the bending segments 2225 are formed on the first electrode plate 222.

In the embodiment shown in FIG. 13, the bending segment 2225 includes a thinned portion 22251. The thinned portions 22251 may be the same as the bending segments 2225 in quantity. Certainly, it can be understood that some of all bending segments 2225 are provided with a thinned portion 22251, while the remaining bending segments 2225 may not be provided a thinned portion 22251.

The thinned portion 22251 may be a groove provided in the first electrode plate 222, and the groove may be formed by removing part of an active substance layer on the first electrode plate 222. In an example, the thinned portion 22251 has a V-shaped cross section in a direction perpendicular to the thickness direction W of the electrode plate, but the cross section of the thinned portion 22251 is not limited to the V shape and may also be U-shaped, rectangular, or the like.

One of two adjacent thinned portions 22251 is located on a surface of the first electrode plate 222 in the thickness direction W of the electrode plate, and the other is located on a surface opposite to the foregoing surface, so that the first electrode plate 222 can be zigzag bent over and over again.

During manufacturing of the electrode assembly 22, the thinned portion 22251 is configured to guide the first electrode plate 222 to bend at the region of the thinned portion 22251 to facilitate the stacking operation. The thinned portion 22251 has a smaller thickness than the first electrode plate 222, and therefore the first electrode plate 222 is more likely to bend at the thinned portion 22251, thereby helping to improve the controllability and accuracy of bending positions.

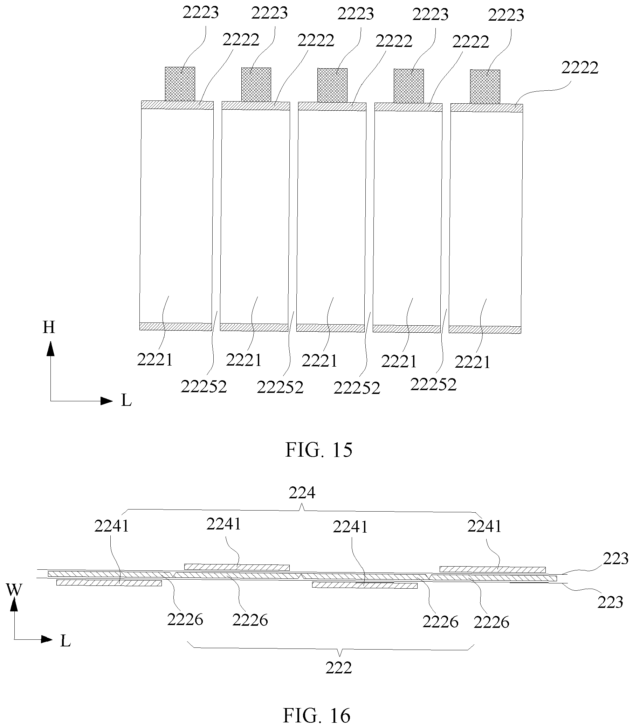

FIG. 14 is a cross-sectional view of the electrode assembly 22 according to some other embodiments of this application. FIG. 15 is a schematic diagram of the first electrode plate 222 according to some other embodiments of this application.

As shown in FIGs. 14 and 15, in some other embodiments, the bending portion 2225 of the first electrode plate 222 includes a cutoff portion 22252. In the unfolded state of the first electrode plate 222, the cutoff portions 22252 divide the first electrode plate 222 into the multiple spaced first stacking segments 2226. During manufacturing of the electrode assembly 22, the multiple first stacking segments 2226 are spaced apart and attached to one integral separator 223, and a distance for spacing the multiple first stacking segments 2226 is equal to the width of one cutoff portion 22252. Then, one integral separator 223 is attached to one side of the multiple first stacking segments 2226 unattached with separator 223 so as to provide the multiple first stacking segments 2226 between the two separators 223. After the first electrode plate 222 is completely provided between the separators 223 on two sides, thermal lamination is performed on the separators 223 and the viscous substance layer 2222 on each first stacking segment 2226 so that the separators 223 and all first stacking segments 2226 are bonded, thereby implementing fixed connection of the first electrode plate 222 and the separators 223. Then the separator 223 and the multiple first stacking segments 2226 are folded over and over again at the positions of the multiple cutoff portions 22252 so that the separators 223 and the multiple first stacking segments 2226 are stacked.

During manufacturing of the electrode assembly 22, the cutoff portions 22252 are configured to guide the separators 223 and the multiple first stacking segments 2226 to fold at the positions of the cutoff portions 22252, so as to facilitate the stacking operation. In addition, because the cutoff portions 22252 divide the first electrode plate 222 into the multiple spaced first stacking segments 2226, the dimensional precision of the first stacking segments 2226 can be precisely controlled. This facilitates the controllability and accuracy of folding positions.

In some embodiments, the first electrode plate 222 is an anode plate. A current collector of the anode plate is made of a metal material such as copper or copper alloy. The current collector of the anode plate is coated with an anode active substance layer, and an anode active substance may be a material such as carbon or silicon. Due to characteristics of the anode active substance material, powder falling is likely to occur during the operation of the electrode assembly 22. Having the anode plate bonded to the separators 223 as the first electrode plate 222 can reduce the risk of corrosion to a housing 23 caused by powder falling of an anode active substance material.

Still refer to FIG. 5 and FIG. 14. In some embodiments, the electrode assembly 22 further includes a second electrode plate 224 opposite to the first electrode plate 222 in polarity. When the first electrode plate 222 is an anode plate, the second electrode plate 224 is a cathode plate. The second electrode plate 224 includes multiple second stacking segments 2241. In a stacked state of the electrode assembly 22, each second stacking segment 2241 is provided between two adjacent first stacking segments 2226.

FIG. 16 is a schematic structural diagram of connection the first electrode plate 222, the second electrode plate 224, and the separators 223 when the electrode assembly 22 in the embodiment of FIG. 5 is in an unfolded state.

As shown in FIG. 16, during manufacturing of an electrode assembly 22, on the basis of the first electrode plate 222, the separators 223 are provided on two sides of the first electrode plate 222 in the thickness direction W of the electrode plate so that the separators 223 provided in pairs jointly clamp the first electrode plate 222. Then thermal lamination is performed on the separators 223 on two sides and the viscous substance layer 2222 of the first electrode plate 222 to bond the separators 223 and the first electrode plate 222 together. In an example, after the separators 223 are provided on the first electrode plate 222, the second stacking segments 2241 of the second electrode plate 224 are attached to the separators 223. For example, the second stacking segments 2241 may be connected to the separators 223 through hot pressing, electrophoresis, or binding. One of two adjacent second stacking segments 2241 is attached to one of the separators 223 provided in pairs, and the other is attached to the other of the separators 223 provided in pairs, so that the two adjacent second stacking segments 2241 are provided on two opposite sides of the first electrode plate 222, respectively. Along the thickness direction W of the electrode plate, the first stacking segments 2226 and the second stacking segments 2241 are provided corresponding to each other in position. The first electrode plate 222, the second electrode plate 224, and the separators 223 are bent over and over again to form the electrode assembly 22 stacked. The foregoing arrangement enables the electrode assembly 22 formed to better meet use requirements and optimizes the electrical performance of the electrode assembly 22.

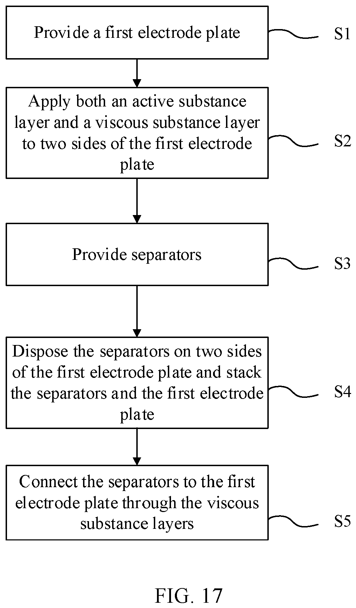

FIG. 17 is a flowchart of a manufacturing method of electrode assembly according to an embodiment of this application.

As in FIG. 17, an embodiment of this application further provides a manufacturing method of electrode assembly. The method includes the following steps:

Step S 1. Provide a first electrode plate 222. In some embodiments, the first electrode plate 222 may be an anode plate.

Step S2. Apply both an active substance layer 2221 and a viscous substance layer 2222 to two sides of the first electrode plate 222 in a thickness direction W of the electrode plate so that the active substance layer 2221 and the viscous substance layer 2222 are disposed adjacent to each other.

Step S3. Provide separators 223. The separator 223 may be a continuous integral structure.

Step S4. Dispose the separators 223 on the two sides of the first electrode plate 222 in the thickness direction W of the electrode plate and stack the separators 223 and the first electrode plate 222.

Step S5. Connect the separators 222 to the first electrode plate 222 through the viscous substance layers 2222.

In some embodiments, the viscous substance layer 2222 connects the separator 223 and the first electrode plate 222 through thermal lamination.

In some embodiments, the step S1 of providing a first electrode plate includes: forming multiple thinned portions 22251 on the first electrode plate 222 through indenting or laser cleaning. Indenting or laser cleaning the first electrode plate 222 removes partial material from the first electrode plate 222, and the partial material removed may be an active substance material or a current collector material, so that the thinned portions 22251 have a smaller thickness than other portions of the first electrode plate 222.

In some embodiments, the manufacturing method of electrode assembly further includes the following steps: stacking the separators 223 and the first electrode plate 222 together and bending at the multiple thinned portions 22251 so that the first electrode plate 222 has multiple bending segments 2225 and multiple stacked first stacking segments 2226, each bending segment 2225 connecting two adjacent first stacking segments 2226.

In some embodiments, the manufacturing method of electrode assembly further includes: providing a second electrode plate 224 and providing the second electrode plate 224 between stacked adjacent first stacking segments 2226.

In the manufacturing method of electrode assembly in this application, with the viscous substance layers 2222 applied to two side ends of the current collector 2224 in the height direction W of the electrode plate, the separators 223 are bonded to the first electrode plate 222 through the viscous substance layers 2222 so that the positions of the separators 223 are fixed with respect to the first electrode plate 222 without applying an adhesive layer to the separator 223, thereby reducing costs and improving the production efficiency.

The foregoing descriptions are merely preferred embodiments of this application and are not intended to limit this application. Persons skilled in the art understand that this application may have various modifications and variations. Any modifications, equivalent replacements, and improvements made without departing from the spirit and principle of this application shall fall within the protection scope of this application.

## Claims

1. An electrode assembly, **characterized by** comprising:
a first electrode plate, wherein the first electrode plate is coated with both an active substance layer and a viscous substance layer on two sides in a thickness direction of the electrode plate, and the active substance layer and the viscous substance layer on each side are disposed side by side in a height direction of the electrode plate; and
separators provided on the two sides of the first electrode plate in the thickness direction of the electrode plate and stacked with the first electrode plate; wherein
in an unfolded state of the electrode assembly, the separator on each side of the first electrode plate is a continuous integral structure, and the separators are connected to the first electrode plate through the viscous substance layers.

2. The electrode assembly according to claim 1, **characterized in that** in the height direction of the electrode plate, the viscous substance layer is applied to two side ends of the first electrode plate, and the active substance layer is applied between the viscous substance layers on two sides.

3. The electrode assembly according to claim 2, **characterized in that** in the height direction of the electrode plate, one or more viscous substance layers are further disposed spaced apart between the viscous substance layers on the two sides, with an active substance layer being provided between two adjacent viscous substance layers.

4. The electrode assembly according to any one of claims 1 to 3, **characterized in that** the viscous substance layer has a width of 2-20 mm in the height direction of the electrode plate.

5. The electrode assembly according to any one of claims 1 to 4, **characterized in that** thickness of the viscous substance layer in the thickness direction of the electrode plate is larger than or equal to thickness of the active substance layer.

6. The electrode assembly according to any one of claims 1 to 5, **characterized in that** the viscous substance layer has a thickness of 25-120 µm in the thickness direction of the electrode plate.

7. The electrode assembly according to any one of claims 1 to 6, **characterized in that** the viscous substance layer is a hot-melt adhesive layer, and the hot-melt adhesive layer connects the separator and the first electrode plate through thermal lamination.

8. The electrode assembly according to any one of claims 1 to 7, **characterized in that** a material of the viscous substance layer is polypropylene.

9. The electrode assembly according to any one of claims 1 to 8, **characterized in that** the first electrode plate comprises multiple bending segments and multiple stacked first stacking segments, each bending segment connecting two adjacent first stacking segments; and in the thickness direction of the electrode plate, the bending segment comprises a thinned portion or a cutoff portion to facilitate bending of the first electrode plate.

10. The electrode assembly according to any one of claims 1 to 9, **characterized in that** the first electrode plate is an anode plate.

11. The electrode assembly according to any one of claims 1 to 10, **characterized by** further comprising a second electrode plate opposite to the first electrode plate in polarity, wherein the second electrode plate comprises multiple second stacking segments, and in a stacked state of the electrode assembly, each second stacking segment is provided between two adjacent first stacking segments.

12. A manufacturing method of electrode assembly, **characterized by** comprising the following steps:
providing a first electrode plate, and applying both an active substance layer and a viscous substance layer to two sides of the first electrode plate in a thickness direction so that the active substance layer and the viscous substance layer are disposed adjacent to each other; providing separators;
providing separators, and disposing the separators on the two sides of the first electrode plate in the thickness direction of the electrode plate and stacking the separators and the first electrode plate; and
connecting the separators to the first electrode plate through the viscous substance layers.

13. The manufacturing method according to claim 12, **characterized in that** the viscous substance layer connects the separator to the first electrode plate through thermal lamination.

14. The manufacturing method according to claim 12 or 13, **characterized in that** the step of providing a first electrode plate comprises:
forming multiple thinned portions on the first electrode plate through indenting or laser cleaning.

15. The manufacturing method according to claim 14, **characterized by** further comprising the following steps: stacking the separators and the first electrode plate together and bending at the multiple thinned portions so that the first electrode plate has multiple bending segments and multiple stacked first stacking segments, each bending segment connecting two adjacent first stacking segments.

16. The manufacturing method according to any one of claims 12 to 15, **characterized by** further comprising: providing a second electrode plate and providing the second electrode plate between stacked adjacent first stacking segments.

17. A battery cell, **characterized by** comprising the electrode assembly according to any one of claims 1 to 11 or comprising an electrode assembly manufactured by using the manufacturing method of electrode assembly according to any one of claims 12 to 16.

18. A battery, **characterized by** comprising at least one battery cell according to claim 17.

19. An electric apparatus, **characterized by** comprising the battery according to claim 18, wherein the battery is configured to supply electric energy.
